# EUROPÄISCHE PATENTSCHRIFT

(11) **EP 3 292 766 B1**
(45) Veröffentlichungstag und Bekanntmachung des Hinweises auf die Patenterteilung: **21.08.2024**
(21) Anmeldenummer: 17194038.0
(22) Anmeldetag: 22.03.2016
(51) Int. Cl.: A22C 25/00, A23L 17/10, A23P 30/10, A23B 4/06, A22C 25/18

(54) **VERFAHREN ZUM HERSTELLEN VON THUNFISCHSTÜCKEN**
METHOD FOR PRODUCING TUNA FISH PIECES
PROCÉDÉ DE FABRICATION DE LONGES DE THON

(30) Priorität: 23.03.2015 DE 102015104347
(43) Veröffentlichungstag der Anmeldung: 14.03.2018
(62) Teilanmeldung aus: 16711616.9
(73) Patentinhaber: Nienstedt GmbH, 45721 Haltern am See (DE)
(72) Erfinder: Groneberg-Nienstedt, Petra, 40237 Düsseldorf (DE); Pinz, Uwe, 32609 Hüllhorst (DE)
(74) Vertreter: btb IP Bungartz Baltzer Partnerschaft mbB Patentanwälte

(56) Entgegenhaltungen:
- EP-A2- 1 849 369
- WO-A1-96/31131
- DE-A1- 3 402 611
- US-A- 4 557 019
- US-A- 4 748 724
- US-A- 4 948 620

## Beschreibung

Die Erfindung betrifft ein Verfahren zum Herstellen von Thunfischstücken nach dem Oberbegriff des Anspruch 1.

Ein Verfahren zum Formen von tiefgefrorenem Fisch ist aus der EP 2 211 635 A1 bekannt. Bei diesem Verfahren werden Stücke von Fleisch oder Fisch tiefgefroren in eine Formmulde eingegeben und anschließend über zwei Teilpressschritte in eine gewünschte Form gepresst, wobei die Teilpressschritte derart ausgestaltet sind, dass die Faserstruktur des Fleisches möglichst erhalten bleibt.

Die EP 1 811 850 A1 beschreibt ein Verfahren, bei dem Fleischstücke, auch in Form von Fleisch oder Fisch, vor dem Formen in der Presse auf ein gewünschtes Gewicht gebracht werden. Bei beiden Verfahren wird das Fleisch bzw. der Fisch tiefgekühlt in die Presse eingelegt und von einem Pressstempel in eine Formmulde gedrückt oder von einem konturierten Pressstempel gegen eine ebene oder konturierte Widerlagerfläche gedrückt.

Mit dem bekannten Verfahren ist es möglich, Fleischstücke bzw. Fischstücke zum einen umzuformen und zum anderen in einer Form derart zusammenzupressen, dass sie insbesondere durch austretendes Protein aneinanderhaften, so dass aus einzelnen Fleischstücken ein Gesamtstück erzeugt werden kann, das dem Aussehen eines aus muskelfleischgeschnittenen Fleischstückes bzw. Fischstückes entspricht.

Aus der EP 1 988 781 A1 ist ein weiteres Verfahren bekannt, bei dem Fleischstücke oder Fischstücke einem Formschritt, in der Fachwelt auch "Shaping" genannt, unterzogen werden. Hierzu wird zunächst in einem ersten Sortierschritt das Fleisch sortiert und vorbereitet. Frische oder gefrorene Fleischstücke, die unter einem Sollgewicht liegen, werden gesammelt und zu Clustern zusammengefasst, die dann dem Sollgewicht entsprechen. Fleischstücke die dem Sollgewicht entsprechen, werden dem Verfahren ohne weiteres zugeführt. Fleischstücke, die das Sollgewicht überschreiten, werden beschnitten, der Abschnitt wird wiederum der ersten Gruppe zugeführt und das nun auf Sollgewicht gebrachte Fleischstück wird weiter dem Formschritt zugeführt. Fleischstücke, die während der Sortierung nicht tiefgefroren sind, werden im Anschluss an die Sortierung tiefgefroren. Anschließend werden die Fleischstücke, wie oben bereits beschrieben, in einer Formpresse auf die gewünschte Kontur gepresst.

Nach dem Formen des Fleischstückes oder der Cluster der Fleischstücke wird dann entweder das Produkt eingedost oder es wird als Convenience-Produkt weiterverarbeitet. Im Rahmen der Verpackung in Dosen wird dabei Fisch, insbesondere Thunfisch, üblicherweise zunächst gegart, anschließend gekühlt oder tiefgefroren in die Dose eingefüllt. Anschließend kann eine Marinade hinzugefügt werden, die Dose wird dann verschlossen und sterilisiert. Ein Convenience-Produkt wiederum kann beispielsweise nach der Formgebung paniert, anschließend gekühlt oder tiefgefroren verpackt werden. Letztlich hängt dies von der gewünschten Lagerdauer und weiteren Anforderungen des Anwenders ab.

Der Nachteil des bekannten Verfahrens besteht darin, dass es sich zwar grundsätzlich zur Verarbeitung von Thunfischstücken eignet, aufgrund der Besonderheit des Thunfisches aber die gewichtsoptimierte Portionierung schwierig ist. Dies liegt daran, dass Thunfisch im Gegensatz zu vielen anderen Fisch- und Fleischsorten nicht so einfach geschnitten und verarbeitet werden kann. Der vergleichsweise teure Thunfisch ist nämlich nicht leicht umzuformen und zusammenzupressen wie beispielsweise andere Fischarten oder tierisches Fleisch. Hier besteht das Risiko, dass die empfindlichen Fasern des Thunfisches zerstört werden, so dass der Eindruck eines Filetstückes verloren geht und das Stück beim späteren Garen zerfällt.

Aufgabe der Erfindung ist es daher, ein Verfahren zum Formen von tiefgefrorenen Thunfischteilen zu schaffen, bei dem Outputware in möglichst hoher Qualität erzeugt wird.

Diese Aufgabe wird nach der Erfindung durch ein Verfahren nach Anspruch 1 gelöst.

Im Zusammenhang mit der Beschreibung des erfindungsgemäßen Verfahrens wird dabei das als Eingangsprodukt verwendete Thunfischstück als Inputware bezeichnet. Dies sind Stücke, die aus dem ganzen Fisch herausgeschnitten werden, in der Regel Rückenfilets (sogenannte "Loins") des Fisches. Die Anwendung der Erfindung soll jedoch nicht auf Rückenfilets beschränkt sein, obwohl diese die bevorzugten Eingangsprodukte sein werden. Die Inputware kann auch aus mehreren Stücken z.B. auch mehreren Rückenfilets bestehen, die zu einem Cluster/Block zusammengefroren wurden. Daher wird vorliegend allgemein von "Thunfischzuschnitten", gesprochen. Das Endprodukt des Verfahrens ist die Outputware.

Die Inputware wird in der Regel nicht symmetrisch sein und muss daher vor der Festlegung des Schnittmusters in Form, Lage und/oder Größe erfasst werden. Hierzu ist natürlich ferner wichtig, dass diese Größen danach bis zum Einbringen der Schnitte nicht mehr verändert werden oder reproduzierbar wiederherstellbar sind. Daher wird bevorzugt bei Erfassung der Form, Lage und/oder Größe die Inputware dann zumindest auf einem Warenträger oder schon auf einer Schneidvorrichtung fixiert, so dass der Bezug von erfasster Form, Lage und/oder Größe zum Schnittbild nicht mehr verändert wird. Bei regelmäßig geformter Inputware oder Ware mit einer definierten Auflage und Form kann dagegen auf die Bestimmung von Form, Lage und/oder Größe ggfs. verzichtet werden.

Als Ziel des Verfahrens soll aus der Inputware oder auch aus mehreren Inputwaren eine Outputware mit möglichst hoher Qualitätsanmutung unter gleichzeitiger Optimierung der Ausbeute hergestellt werden. Thunfisch wird dem Verbraucher heute häufig als gegarte Konservenware, als aus einem Stück geschnittenes, ungegartes Steak oder als Sashimi- oder Sushi-Stück angeboten. Dabei weist das Fleisch eine prägnante Faserstruktur auf, die bei der Verarbeitung, insbesondere bei der Konservenbefüllung, häufig verloren geht.

Die Filetteile des Thunfischs werden als Rückenfilets in verschiedenen Qualitätsstufen gehandelt. Ziel des vorliegenden Verfahrens ist es, möglichst gleichgewichtige, gleichgeformte Stücke des Thunfischs zu erzeugen, die die optische Erscheinung eines aus einer Premiumqualität geschnittenen Thunfischsteaks aufweisen. Ferner soll das wertvolle, inzwischen bei manchen Arten auch seltene Fleisch möglichst vollständig bei möglichst hoher Handelsqualität verarbeitet werden. Hierzu werden als Inputware bevorzugt tiefgefrorene Rückenfilets der Premiumqualität verwendet. Diese entstehen entweder durch Filetieren des gefrorenen Fisches oder werden nach dem Filetieren des frischen Fischs tiefgefroren. Diese tiefgefrorenen Thunfischzuschnitte sollen dann möglichst ohne ein Auftauen zur Outputware verarbeitet werden, da ein Auftauen und Wiedereinfrieren die Qualität des Fleisches negativ beeinflusst. Beispielsweise leidet hierunter das Qualitätsmerkmal "Fleischfarbe". Durch die erfindungsgemäße Ausgestaltung des Verfahrens zum Herstellen geformter Thunfischprodukte werden mehrere Verbesserungen erreicht.

Bei der Verarbeitung von beispielsweise Rückenfilets zu hochwertigen Steaks wurde bisher die nicht gefrorene oder auch die gefrorene Ware "nach Augenmaß" portioniert, was zu einer unbefriedigenden Ausbeute an hochwertiger Outputware führt. Nun kann die Ware im gefrorenen Zustand auf das gewünschte Gewicht und insbesondere in eine gewünschte Form gebracht werden. Dadurch wird die Ausbeute hinsichtlich hochwertiger Outputware deutlich gesteigert. Um aus der gefrorenen Inputware möglichst viele Steaks einer einheitlichen Größe mit gleichem Gewicht herstellen zu können, wird das gefrorene Rückenfilet der optischen Vermessung unterzogen. Dies ist im Gegensatz zu den bisherigen Verfahren notwendig, da die gefrorene Inputware keine ebene Unterseite aufweist, sondern individuell betrachtet werden muss. Ein Rückenfilet hat dabei die Besonderheit, dass sein Durchmesser von vorne nach hinten abnimmt, die Dicke der zu schneidenden Stücke von vorne nach hinten also immer zunehmen muss, um ein gleiches Gewicht zu erhalten.

Die Bestimmung der zu schneidenden individuellen Stücke erfolgt über die Berechnung und Festlegung einer optimalen Schnittlinie bzw. meist mehrerer Schnittlinien. Das aus dem Rückenfilet zu schneidende Stück soll dabei natürlich das Aussehen und die Struktur eines Steaks erhalten. Hierzu wird das Rückenfilet in Querrichtung geschnitten, so dass das typische Schnittbild des Thunfischs mit Blick auf die Fasergrenzen erhalten bleibt. So kann ein großer Bereich des Rückenfilets in Premiumqualität als wertvolles Steakfleisch erhalten bleiben.

Durch die optische Vermessung wird es möglich, die nicht flach auf einer Schneidunterlage aufliegende, gefrorene Ware exakt zuzuschneiden. Hierzu werden die Schnittlinien bzw. -ebenen (das Schnittmuster) errechnet und der fixierten Inputware überlagert, so dass nachfolgend entlang dieser Linien bzw. Ebenen geschnitten werden kann. Als Ergebnis entstehen dann unterschiedlich dicke Stücke des Fleisches in bester Qualität.

Die optische Vermessung der tiefgefrorenen Thunfisch-Ware kann bei einer bevorzugten Ausgestaltung des Verfahrens über optische Sensoren, insbesondere Kameras und/oder auch Lasertriangolation in Verbindung mit einer entsprechenden Erfassung und Auswertung erfolgen. Dabei kann insbesondere bei der Verarbeitung der aus der Fischlende geschnittenen Rückenfilets eine vorherige Ausrichtung der tiefgekühlten Stücke erfolgen, so dass diese grundsätzlich gleich ausgerichtet sind und nur die individuellen Maßabweichungen des einzelnen Stücks erfasst und berechnet werden müssen.

Wegen der von vorne nach hinten abnehmenden Querschnittsfläche kann nun die bei gleichem Gewicht eintretende Formabweichung durch einen nachfolgenden Formprozess korrigiert werden. Dieser Formprozess ist bevorzugt ein Pressvorgang im Rahmen des so genannten Shapens. Ein solches Formverfahren ist zum Beispiel aus der EP 2 211 635 A1 bekannt. Als Ergebnis des Formprozesses liegt weiterhin Outputware mit dem Erscheinungsbild eines aus dem Filet herausgeschnittenen Steaks vor, die nun aber trotz der unterschiedlichen Ausgangsstruktur eine einheitliche Größe und Form aufweisen. Natürlich können hier nicht nur flache Steaks, sondern auch viele andere, auch dreidimensional konturierte Formen erzeugt werden.

Die Anwendung der Erfindung ist auch nicht auf das Herstellen von Steaks oder die Verarbeitung der ganzen Filetstücke beschränkt. Neu ist die Anpassung des Schneidprozesses an das vom Benutzer gewünschte Endprodukt durch die Auswahl des geeigneten Rohmaterials und den optimierten Schneidprozess nach der optischen Vermessung der als Eingangsstücke verwendeten Inputware. Diese Optimierung erfolgt gewichtsorientiert derart, dass möglichst werthaltige Stücke erzeugt werden können, wobei werthaltig bedeutet, dass möglichst zusammenhängende, einem natürlichen Steak ähnliche Stücke den größten wirtschaftlichen Wert aufweisen, während kleine Abschnitte als wirtschaftlich geringer wertig eingestuft werden, die bei Unterschreiten einer gewissen Mindestgröße einer anderweitigen Verarbeitung zugeführt werden.

Als Eingangsprodukt für das erfindungsgemäße Verfahren können (wie oben bereits beschrieben) tiefgefrorene Rückenfilets (Filetstücke) oder auch tiefgefrorene Blöcke von zusammengefassten Stücken Verwendung finden. Es kann sich dabei um gegarte oder nicht gegarte Ware handeln. Sofern Blockware verarbeitet wird, muss diese nicht notwendigerweise aus ganzen Filetstücken des Rückenfilets bestehen, auch mehrere Zuschnitte von Stücken des Filets oder sonstigen Stücken können hier verarbeitet werden.

Nach dem Einbringen der Portionsschnitte wird die nicht zielkonforme, d.h. zu leichte oder nicht geeignet geformte Inputware aus dem Verfahren ausgeschleust, sofern sie nicht zusammen mit anderen Thunfischstücken zu einem steakähnlichen Stück verarbeitet werden können bzw. sollen. Diese ausgeschleusten Teile können dann beispielsweise zu nicht gegarten Blöcken zusammengefasst und in einer Anwendung, die geringere Ansprüche an die Qualität erlaubt, weiterverarbeitet werden, wobei unter Qualität nicht die Frische, sondern die zusammenhängende Faserstruktur des Fleisches verstanden wird.

Das Einbringen der Portionsschnitte erfolgt automatisiert anhand von errechneten Schnittlinien bzw. -ebenen, eines Schnittmusters, unter Berücksichtigung des Ergebnisses der optischen Vermessung der individuellen Fleischstücke. Hier wird neben der Grundform der Fleischstücke auch die Lage der Faserstrukturen erfasst und bei der Berechnung der Schnittlinien berücksichtigt, so dass die Schnittlinien rechtwinklig zum Faserverlauf eingebracht werden. Eine Schnittlinie kann dabei gerade oder gebogen sein.

Die ausgeschleuste Ware kann zum Beispiel als einfache Dosenware verpackt und zum günstigen Preis angeboten werden, wobei hier die einzelnen Stücke eher klein sind und zum Beispiel als Zutat für Salat oder auch eine Thunfisch-Pizza dienen können.

Die nicht ausgeschleusten, auf das gewünschte Zielgewicht zugeschnittenen Stücke können bereits durch den Portionsschnitt die gewünschte Form aufweisen. Dies wird aber nur bei den wenigsten Produkten der Fall sein. Die überwiegenden Stücke werden über den Formprozess dann auf eine gleiche Form gebracht. Ferner kann es natürlich möglich sein, dass eine einheitliche Form gar nicht gewünscht ist, so dass in diesen Fällen auf den formenden Pressschritt sogar verzichtet werden kann oder dass unterschiedliche Formen erzeugt werden.

Die so erzeugte Ware kann in allen Fällen anschließend mariniert oder ohne Zugabe von Marinade verpackt und gelagert bzw. ausgeliefert werden.

Sollen anstelle der einzelnen Filetstücke Blöcke von tiefgekühlter, vor dem Tieffrieren gegarter Ware verarbeitet werden, können diese zunächst durch geeignetes Zusammenlegen der einzelnen Fleischstücke vor oder nach dem Garprozess zu den Blöcken und anschließendes Tieffrieren erzeugt werden. Hierbei kann schon beim Tieffrieren eine Vorformung erfolgen, indem die Filetstücke zum Beispiel in eine Gefrierform aneinander anliegend eingelegt werden, so dass Blöcke unterschiedlicher Dimension und Form erzeugt werden können. Diese Blöcke müssen dabei keine regelmäßige oder symmetrische Form aufweisen, so können beispielsweise auch kleinere Filetstücke zu der Form eines einzelnen, größeren Filets zusammengelegt werden.

Beim Einlegen wird die Faserausrichtung des Fleisches berücksichtigt, so dass die einzelnen Stücke mit zueinander paralleler Faserorientierung angeordnet werden. Um den von vorne nach hinten geringer werdenden Querschnitt zu berücksichtigen, können dabei Fischstücke abwechselnd um 180° zueinander verdreht nebeneinander angeordnet werden.

Ist der Block, wie oben beschrieben, homogen, mit zueinander parallelen Faserrichtungen erzeugt worden und hat er definierte Außenkonturen, kann gegebenenfalls auf eine optische Vermessung der einzelnen Blöcke verzichtet werden. Andernfalls erfolgt auch hier eine Vermessung, um die Ausbeute an hochwertiger Outputware zu optimieren, wobei hier zum Beispiel das Erscheinungsbild der Seitenflächen zur Bestimmung des Faserverlaufs herangezogen werden kann. Die Abmessungen der Blöcke mit definierter Außenkontur sind nicht wie in der Weißfischindustrie standardisiert, sondern können auf das Endprodukt und das damit verbundene optimale Schnittmuster ausgerichtet werden.

Nach dem Schneiden dieser gegarten, tiefgefrorenen Blöcke in die einzelnen Portionen kann nochmals das Gewicht kontrolliert werden, wobei nachfolgend die dann erzeugten, üblicherweise scheibenförmigen Fleischstücke mit beispielsweise rechteckigem oder rundem Querschnitt dem Formprozess in der Pressvorrichtung unterzogen werden. Durch dieses Formen erhält dann das Produkt ein Erscheinungsbild, das sich an den Fasern von natürlichen Filetstücken orientiert. Die Umformgrade können dabei oft gering gehalten bleiben, da es in vielen Fällen nur notwendig ist, eine Kontur zu erzeugen, die an ihren Umfangsflächen der Umfangsfläche eines natürlichen Filetstückes entspricht. Gleichzeitig kann die Ober- und die Unterseite des Stückes noch die Kontur eines handgeschnittenen Stückes mit eher unebener Oberfläche erhalten.

Die so erzeugten Stücke werden dann weiterverarbeitet, beispielsweise verpackt oder auch in eine Dose eingefüllt, auch hier kann dann nach der Abfüllung eine Marinade zugefügt werden, wobei die Dose anschließend verschlossen und in geschlossenem Zustand sterilisiert werden kann.

Alternativ zur Erzeugung von steakähnlichen Stücken, die zunächst aus den Filetstücken (Rückenfilets) geschnitten und in Form gepresst werden, kann auch das tiefgefrorene Filetstück zumindest aus dem vorderen Bereich des Filetstückes über das Presswerk umgeformt werden, so dass sich dann durch Zerschneiden des so erzeugten Formkörpers steakähnliche Stücke herstellen lassen. Auch hier erfolgt eine optische Erfassung um die Faserlage bzw. den Faserverlauf und die optimale Länge des Filetstückes zu ermitteln, welches der Verformung unterzogen wird, um die jeweils notwendige Schnittführung zu bestimmen, so dass ein qualitäts- und gewichtsoptimiertes Stück hergestellt wird.

Analog zum oben beschriebenen Verfahren kann auch mit ungegarter Ware verfahren werden. In diesem Fall werden die Blöcke aus ungegartem, also rohem Thunfisch durch Zusammenstellen der einzelnen Stücke, ebenfalls bevorzugt mit faserparalleler Orientierung zusammengestellt und tiefgefroren. Wie bereits erwähnt, können auch hier die Blöcke unterschiedliche Außenkonturen haben, mit den daraus resultierenden Anforderungen an die optische Vermessung. Auch hier werden Portionsschnitte eingebracht, um das Produkt auf das gewünschte Gewicht zuzuschneiden. Anschließend wird diese Scheibe rohen Thunfischs dann in der Pressvorrichtung umgeformt und auf die bereits beschriebene Weise durch Eindosen oder im Rahmen einer Convenience-Verarbeitung weiterverarbeitet.

Insbesondere dann, wenn nach dem Pressvorgang die in das Verfahren eingebrachte Rohware gegart werden soll, ist es besonders vorteilhaft, dass die Stücke eine einheitliche Form aufweisen. Die einheitliche Form und Dicke ermöglicht es, das Stück homogen zu garen, während beim Garen ganzer Filetstücke aufgrund der unterschiedlichen Dicken bisher Schwierigkeiten auftraten. Das Garen erfolgt üblicherweise auf Bändern, die durch einen Kombinationsofen, der Heißluft mit Wasserdampf kombiniert, hindurch laufen.

Würden nun, wie bei der herkömmlichen Verfahrensweise in einem Garprozess ganze Filetstücke gegart, wird bei entsprechender Einstellung der Verweildauer und Hitze der vordere, dickere Bereich des Filetstückes durchgegart. Dies bedingt aber zwangsläufig, dass der hintere, dünnere Bereich übergart wird. Wird der Garprozess dagegen verkürzt oder die Hitzeeinwirkung reduziert, ist das Produkt im vorderen Bereich wiederum nicht durchgegart. Durch das Erzeugen von homogenen Stücken, unabhängig davon, ob die Ware vor oder nach dem Zerschneiden in Form gepresst wird, kann nun ein wesentlich harmonischeres Garen realisiert werden, was die Fertigung qualitätsoptimiert gegarter Stücke wesentlich erleichtert.

Das Verfahren ist charakterisiert, durch die Zusammenstellung von nicht gefrorenen gegarten oder rohen Thunfischteilen zu einem Block und gekennzeichnet, durch die Verfahrensschritte (nicht gemäß der Erfindung):
- Herstellen des Blocks durch Zusammenfassen nicht gefrorener Thunfischteile zu wenigstens einem Cluster von Thunfischteilen,
- Formen des nicht gefrorenen Blocks auf eine anwendungsorientierte Endform aus dem Cluster von Thunfischteilen im nicht gefrorenen Zustand und Tieffrieren des so geformten Blocks oder
- Tieffrieren des Blocks und anschließendes Formen des Blocks auf die gewünschte, anwendungsorientierte Endform durch Schneiden und/oder Umformen in einer Pressvorrichtung, in der der Block über einen Pressstempel unter Druck in eine anwendungsorientierte Form gebracht wird oder
- Formen des Blockes und Tieffrieren ohne Maßgabe der weiteren Verwendung unter Hinzuziehung der optischen Vermessung sobald das letztendlich gewünschte Thunfischstück feststeht und
- Erzeugen der Thunfischstücke durch Schneiden des Blockes in Stücke..

Dieses Verfahren ist im Wesentlichen dadurch charakterisiert, dass nichtgefrorene Thunfischteile, die beispielsweise wegen ihrer Größe nicht als Einzelstück verwertbar sind, möglichst qualitätserhaltend verarbeitet werden. Zunächst werden dafür bevorzugt diejenigen Thunfischteile gesammelt, die für die erfindungsgemäße Verarbeitung geeignet sind. Dabei wird bevorzugt bereits beim Zusammenstellen der Thunfischteile darauf geachtet, dass das anwendungsorientierte Endprodukt mit möglichst hoher Qualität hieraus herstellbar ist.

Unter anwendungsorientiertem Endprodukt wird dabei verstanden, dass die Fleischstruktur, insbesondere der Faserverlauf, des Thunfisches bei der Zusammenstellung der einzelnen Blöcke sowie auch beim Verarbeiten dieses Blockes bereits berücksichtigt wird. Dies bewirkt, dass trotz der Tatsache, dass das über das Verfahren hergestellte Thunfischstück in der Regel aus mehreren Einzelteilen besteht, der optische Eindruck eines Thunfischproduktes, das vermeintlich aus einem Stück geschnitten ist, weitgehend erhalten bleiben kann.

Weiterhin kann es Ziel des Verfahrens sein, dass zwar erkennbar ist, dass das Thunfischstück aus mehreren Einzelteilen besteht, aber dennoch erkennbar bleibt, dass diese Einzelteile Teile hoher Qualität sind. Aus diesem Grund soll unter dem Begriff Thunfischstück auch eine Zusammenstellung einzelner Stücke angesehen werden, die aber zusammenhängend angeboten, zum Beispiel in einer Dose verkauft werden.

Durch das Verfahren werden nun die nicht gefrorenen Thunfischteile zunächst zu den Blöcken, also zu Kombinationen von einzelnen Teilen oder Filets, zusammengefasst. Hierbei wird darauf geachtet, dass die Thunfischteile natürlich zum einen eine hinreichende Qualität aufweisen, zum anderen aber bei der Zusammenstellung der Blöcke möglichst so ausgerichtet sind, dass trotz der weiteren Verarbeitung das später hergestellte Thunfischstück möglichst über einen großen Bereich eine für den Endverbraucher sichtbare Querschnittsfläche aufweist, die die typische Erscheinungsweise eines quer zur Faserrichtung geschnittenen Filetstückes besitzt.

Aus den nicht gefrorenen Thunfischteilen wird nun zunächst ein Cluster zusammengestellt, der dann im einfachsten Fall auch schon der fertige Block für die Weiterverarbeitung sein kann. In diesem Zustand ist das Thunfischfleisch nicht gefroren.

Zum einen ist es möglich, die Thunfischteile zusammenzulegen und aneinander anliegend einzufrieren. Dann kann etwa ein kubischer Block aus diesem Cluster herausgeschnitten oder bei einer Endlosfertigung des Clusters von diesem abgeschnitten werden kann. So können bei einer Ausgestaltung dieses Verfahrens Thunfischteile in einer vorgegebenen Füllhöhe auf ein Laufband aufgelegt oder in Formen eingelegt werden, wobei anschließend das Tieffrieren erfolgt. Im Fall des Laufbandes kann so ein Endlosband aus gefrorenem Thunfisch erzeugt werden, das nach Passieren der Gefrierstation in die Blöcke durch Einbringen eines Schnittes, der beispielsweise rechtwinklig zur Vorschubrichtung angeordnet wird, zerlegt wird. Die so erzeugten quaderförmigen Blöcke können entweder unmittelbar weiterverwendet werden oder über eine später noch zu beschreibende Pressstation in die gewünschte Endform des Blockes gebracht werden.

Sofern für den Block einzelne Formen verwendet werden, kann diese Form natürlich zumindest bezüglich der Seitenwände und der Unterseite bereits die endgültige Form des Blockes aufweisen. Weiterhin ist es möglich, die Thunfischteile bereits in geeigneter Orientierung in eine elastische Umhüllung einzugeben, in der sie dann zum Beispiel in zylindrischer Form tiefgefroren werden können. Eine solche Umhüllung kann zum Beispiel die aus der Wurstproduktion bekannte Pelle in Form eines Natur- oder Kunstdarmes sein.

Ein guter Qualitätseindruck für das später hergestellte Thunfischstück entsteht dann, wenn innerhalb des Clusters und damit auch innerhalb des später hieraus hergestellten Blocks die Thunfischstücke bereits so orientiert sind, dass das spätere Schnittbild dem Verbraucherwunsch möglichst nahe kommt. Hierzu werden die Thunfischstücke so angeordnet, dass dem späteren Schnittbild, wenn der Block anschließend in Stücke zerschnitten wird, Rechnung getragen wird. So wird bei vielen Anwendungen der Verbraucher eine Sicht auf die geschnittenen Fasern Thunfischfleisches bevorzugen, da dies auch den optischen Eindruck erzeugt, dass es sich um Filetfleisch handelt. Bisher bestand das Problem, dass selbst dann, wenn Filetfleisch verarbeitet wurde, durch die Verarbeitung der optische Eindruck verloren gehen konnte.

Die Tatsache, dass das Schnittbild an den Verbraucherwunsch angepasst ist, wird im vorliegenden Zusammenhang mit "anwendungsorientiert" bezeichnet. So kann beispielsweise bei der Herstellung von Dosenware der Thunfisch zu Blöcken zusammengefasst werden, wobei die Blöcke eine Querschnittsform aufweisen, die der Querschnittsform der Dose entspricht. Ist bei diesen Produkten die Faser der einzelnen Thunfischteile so ausgerichtet, dass sie längs der Längsrichtung des Blockes und quer zur späteren Schnittrichtung beim Abschneiden der einzudosenden Stücke des Blockes angeordnet ist, wird der Verbraucher später in der Dose auf die rechtwinklig geschnittenen Fasern des Fleisches schauen können. Hieraus resultiert ein wesentlich höherer Qualitätseindruck im Vergleich zu einer nicht kontrolliert orientierten Befüllung der Dose.

Der aus den einzelnen Thunfischteilen hergestellte Cluster kann bereits die Form des Blockes aufweisen, so dass ein explizites Formen des Blockes nur dann notwendig ist, wenn dies nicht der Fall ist. Ferner könnten natürlich die Cluster auch so gebildet werden, dass sie bereits die Endform des Thunfischstückes aufweisen, wobei dies eher die Ausnahme sein wird. Stattdessen wird bei den meisten Anwendungen der Block ein insbesondere ganzzahliges Mehrfaches des Gewichtes der herzustellen Thunfischstücke besitzen, so dass aus dem Block die gewünschten Thunfischstücke erzeugt werden können.

Der Block kann beispielsweise zylindrisch oder quaderförmig sein, oder eine andere Oberfläche aufweisen, die Thunfischstücke können eine Scheibe des Blockes oder auch ein Teil einer Scheibe sein, im letztgenannten Fall würde die Scheibe des Blockes üblicherweise nochmals in einzelne Stücke zerteilt. Wesentlich ist dabei, dass je nach gewünschtem Endprodukt die Schnittlinien zur Faserrichtung des Thunfischfleisches ausgerichtet sind bzw. hieran angepasst sind, so dass eine zur Faser rechtwinklige Ausrichtung vorliegt.

Bei einer unregelmäßigen Oberfläche des Blockes wird er zur Optimierung der Schnittlinien einer optischen Vermessung unterzogen.

Die aus dem Block hergestellten Zwischenprodukte können, wie oben bereits beschrieben, unmittelbar verpackt werden, zum Beispiel in eine Dose eingefüllt werden. Natürlich können auf diese Weise auch aus einzelnen Thunfischteilen steakähnliche Produkte hergestellt werden, die zum Beispiel in Folie eingeschweißt werden und so in den Handel gelangen können.

Bevorzugt wird insbesondere im Rahmen der industriellen Fertigung bereits beim Zusammenfassen der Cluster von Thunfischteilen oder spätestens beim Herstellen des Blockes, dafür Sorge getragen, dass die Anforderungen hinsichtlich des Gewichtes möglichst einfach erzielt werden können. Wird zum Beispiel der Block aus den Clustern hergestellt oder sind die Cluster bereits der fertige Block, weisen diese bevorzugt ein ganzzahliges Vielfaches des Gewichtes der gewünschten Thunfischstücke auf. Dies ist natürlich nur dann notwendig, wenn die Thunfischstücke ein einheitliches Gewicht aufweisen sollen. Wird dagegen hierauf kein Wert gelegt, etwa weil es handelsrechtlich hierauf nicht ankommt oder weil die Stücke später noch zu einem zu erzielenden Gesamtgewicht sortiert werden können, kann dies unterbleiben.

Mit dem Verfahren lassen sich Thunfischstücke herstellen, die aufgrund der geeigneten Anordnung der Fasern des Thunfischfleisches innerhalb des Clusters einen hohen Qualitätseindruck aufweisen. So kann beispielsweise der Block auch die Form eines klassischen Rückenfilets aufweisen, aus dem dann über quer zur Längsrichtung des vermeintlichen Rückenfilets eingebrachte Schnitte Steaks oder Dosenware ausgeschnitten werden können. Erfindungsgemäß werden die Ausrichtung der Thunfischteile im Cluster bzw. Block und die Schnittlinien so gewählt bzw. angeordnet, dass der Thunfisch quer zu seiner Faserrichtung geschnitten wird.

Sollte das Thunfischfleisch tiefgefroren angeliefert werden, wird mit Hilfe der optischen Erfassung die optimale Aufteilung des Blockes in gewichtsgleiche Portionen mit definiertem Faserverlauf ermittelt. Eine zweite Variante kann sein, dass die angelieferte Ware zunächst aufgetaut und dann zu einem Block geformt wird, der in den Abmessungen auf die anwendungsorientierte Endform optimiert und anschließend tiefgefroren wird. Die zweite Variante führt allerdings zu dem mit dem doppelten Auftauprozessen verbundenen Qualitätsverlust.

Weitere Merkmale und Vorteile des erfindungsgemäßen Verfahrens ergeben sich aus der nachfolgenden Beschreibung eines bevorzugten Ausführungsbeispiels der Erfindung anhand der Zeichnungen.

Die Zeichnungen zeigen:
- Fig. 1: einen angeschnittenen Rückenfilets eines Thunfisches mit schematischer Darstellung der Schnittlinien,
- Fig. 2: in schematischer Ansicht den Formprozess des Shapens und
- Fig. 3: das anschließende Eindosen des geformten Stückes als Anwendungsbeispiel.

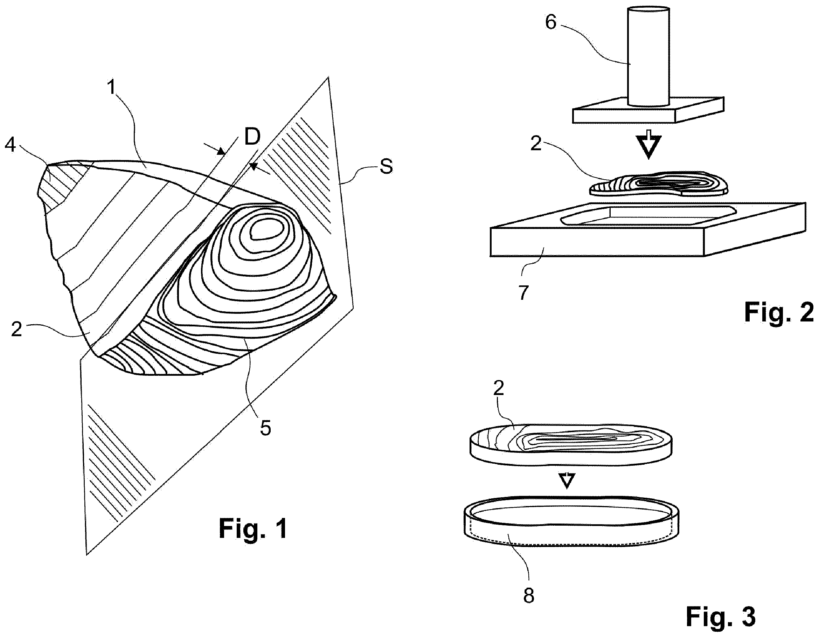

In Figur 1 ist eine Inputware 1 in Form eines Rückenfilets bzw. Filetstücks schematisch dargestellt. Wie zu erkennen ist, nimmt die Größe dieses Filetstücks von vorne nach hinten kontinuierlich ab. Über das erfindungsgemäße Verfahren sollen nun Thunfischsteaks als Stücke 2 hergestellt werden, die neben einem gleichen Gewicht auch eine einheitliche Größe aufweisen.

Ein solches Verfahren kann zum Beispiel verwendet werden, um für fertige Lebensmittel oder auch in Großküchen gleiche Stücke 2 als Outputware anbieten zu können. Dies hat zum einen den Vorteil, dass der Verbraucher in jeder Packung das gleichgeformte Stück 2 findet und so von einer einheitlichen Qualität und Größe der Thunfischeinwaage ausgeht.

Ein anderer Vorteil, der insbesondere bei der Zubereitung in Großküchen, zum Beispiel in den Restaurants des Kreuzfahrtschiffes, bedeutsam ist, besteht darin, dass gleich große und gleichgeformte Stücke 2 einheitliche zubereitet werden können. So können beispielsweise in einem Dampfgarer oder einem Ofen eine Vielzahl von nebeneinanderliegenden Stücken 2 bei gleicher Garzeit mit gleichem Ergebnis des Durchgarens zubereitet werden, ohne dass dünnere Stücke 2 übergart würden oder dickere Stücke 2 noch nicht vollständig durchgegart wären.

Wie aus Figur 1 schematisch zu erkennen ist, werden aus der Inputware 1 die Stücke 2 mit gleichem Gewicht geschnitten. Da der Thunfisch nach hinten dünner wird, erhöht sich die Dicke D der scheibenartigen Stücke 2 mit zunehmendem Schneidfortschritt. Die Dicke D ergibt sich daraus, dass über die optische Erfassung und eine anschließende Berechnung die jeweils notwendige Schneidebene S festgelegt wird, um Stücke 2 gleichen Gewichts zu erzeugen.

Der hintere Rest 4 der Inputware 1 ist zu klein bzw. die notwendigen Umformgrade wären zu groß, um hieraus noch ein steakähnliches Stück 2 zu formen. Daher wird bevorzugt dieser hintere Rest 4 einer anderen Verarbeitung zugeführt, beispielsweise der Verarbeitung der Rückenfilets mit niederen Qualitäten zugeführt, zusammen mit zerfaserter Ware eingedost, als Belag für Pizza oder auch als kleineres Stück, aber mit zusammenhängender Faserstruktur angeboten.

Die Stücke 2 werden im gezeigten Ausführungsbeispiel des Verfahrens in einer Formmulde 7 auf eine gleiche Form umgeformt. Hierzu wird über einen Pressstempel 6 das Stück 2 innerhalb der Formmulde 7 "geshapt", also auf die Grundfläche und Randkontur der Formmulde 7 gebracht.

Figur 3 zeigt eine optionale Erweiterung des Verfahrens. Hier ist die Form der Formmulde 7 aus Figur 2 der Kontur einer Verpackung, z.B. einer Dose, angepasst. Auf diese Weise passt das so erzeugte Filetstück exakt in die Verpackung hinein und kann ohne Bruch oder Zerstörung der Fasern angeboten werden.

Alternativ können natürlich die tiefgefrorene Stücke 2 nach dem Umformen auch als Steaks in einer gemeinsamen Umverpackung vertrieben werden. Wesentlich für die Erhaltung des Qualitätseindruckes ist dabei der Erhalt der Faserstruktur, der sich insbesondere aus dem zielgerichteten Zuschneiden der Stücke 2 und das nachfolgende schonende Formen ergibt. Ferner werden bevorzugt die Umformgrade im Formprozess gering gehalten.

## Patentansprüche

1. Verfahren zur Herstellung von Thunfischstücken, **gekennzeichnet durch** die Verfahrensschritte:
• Herstellen zumindest eines Blocks aus rohen oder gegarten Thunfischteilen durch Ausrichten und Zusammenfassen der Thunfischteile unter Berücksichtigung des Faserverlaufs des Thunfischs zu dem Block von der aneinander anliegenden und/oder haftenden Thunfischteilen, so dass die Thunfischteile bei der Zusammenstellung der Blöcke so ausgerichtet werden, dass das hergestellte Thunfischstück eine für den Endverbraucher sichtbare Querschnittsfläche aufweist, die die typische Erscheinungsweise eines quer zur Faserrichtung geschnittenen Filetstückes besitzt,
• Nachfolgendes Formen des so hergestellten Blocks in tiefgefrorenem oder nicht gefrorenem Zustand in eine anwendungsorientierte Endform,
• Tieffrieren des Blocks, sofern er nicht schon vor dem Formen gefroren wurde, nach dem Formen,
• Schneiden des in die anwendungsorientierte Endform geformten und tiefgefrorenen Blocks in Stücke längs von Schnittlinien, die so ausgerichtet werden, dass sie quer zur Faserrichtung des Thunfischfleisches ausgerichtet sind,
wobei die anwendungsorientierte Endform dadurch charakterisiert ist, dass das Schnittbild an den Verbraucherwunsch, auf die geschnittenen Fasern des Thunfischs zu sehen, angepasst ist und das Formen des Blocks durch formendes Tieffrieren in einer Form, Schneiden und/oder Umformen in einer Pressvorrichtung, in der der Block über einen Pressstempel unter Druck in die anwendungsorientierte Endform gebracht wird erfolgt.

2. Verfahren nach Anspruch 1, **dadurch gekennzeichnet, dass** die Thunfischteile zum Herstellen des Blocks aus rohen oder gegarten Thunfischteilen Filets oder Filetstücke sind.

3. Verfahren nach Anspruch 1 oder 2, **dadurch gekennzeichnet, dass** die Thunfischteile vor oder nach dem Zusammenfassen zu der den Block bildenden Kombination von Thunfischteilen derart beschnitten werden, dass der Block ein vorgegebenes Zielgewicht aufweist.

4. Verfahren nach einem der vorhergehenden Ansprüche, **dadurch gekennzeichnet, dass** der Block durch Einfüllen der nicht gefrorenen Kombination von Thunfischteilen in eine elastische Umhüllung, insbesondere eine Pelle aus Naturdarm oder Kunstdarm, hergestellt und/oder geformt wird.

5. Verfahren nach dem vorhergehenden Anspruch, **dadurch gekennzeichnet, dass** die Umhüllung mit der noch nicht gefrorenen Kombination von Thunfischteilen in eine Form eingelegt wird, deren Innenkontur der gewünschten Außenkontur des Blockes entspricht, wobei die Umhüllung mit den noch nicht gefrorenen Clustern von Thunfisch-Teilen in der Form zur Herstellung des geformten Blocks tiefgefroren wird.

6. Verfahren nach einem der vorhergehenden Ansprüche, **dadurch gekennzeichnet, dass** der Block so ausgebildet ist und einen derartigen Durchmesser aufweist, dass der Block dem Durchmesser eines durchschnittlichen Kopfbereichs eines Thunfisch-Rückenfilets in Premium-Qualität entspricht oder der Größe eines Thunfischsteaks bzw. einer handelsüblichen Dosenverpackung zwischen 50mm und 250mm entspricht.

7. Verfahren nach dem vorhergehenden Anspruch, **dadurch gekennzeichnet, dass** die aus dem Block geschnittenen Scheiben nochmals zerteilt, insbesondere in einzelne Segmente geschnitten werden.

8. Verfahren nach einem der vorhergehenden Ansprüche **dadurch gekennzeichnet, dass** die nach einem der vorhergehenden Ansprüche hergestellten Thunfischstücke als Outputware, insbesondere in Form von Thunfischsteaks, im gefrorenen Zustand mit einem geeigneten Verfahren automatisiert in eine Verpackung eingebracht werden.

9. Verfahren nach dem vorhergehenden Anspruch, **dadurch gekennzeichnet, dass** die Verpackung eine Dose ist.

## Claims

1. Method for producing tuna pieces, **characterized by** the following method steps:
• Producing at least one block from raw or cooked tuna pieces by aligning and combining the tuna pieces, taking into account the grain of the tuna, to form the block of tuna pieces lying next to one another and/or adhering to one another, so that the tuna pieces are aligned when the blocks are combined in such a way that the tuna piece prepared comprises a cross-sectional area which is visible to the end consumer and has the typical appearance of a fillet piece cut transversely to the grain,
• Subsequent shaping of the block thus produced in a deep-frozen or unfrozen state into an application-oriented final shape,
• Deep-freezing the block, if it has not already been frozen before molding, after molding,
• Cutting the block formed and frozen into the application-oriented final shape into pieces along cutting lines which are aligned so that they are transverse to the fiber direction of the tuna meat,
wherein the application-oriented final shape is **characterized in that** the cutting pattern is adapted to the consumer's desire to see the cut fibers of the tuna and the shaping of the block is carried out by forming deep-freezing in a mold, cutting and/or forming in a pressing device in which the block is brought into the application-oriented final shape under pressure via a pressing die.

2. Method according to claim 1, **characterized in that** the tuna parts for producing the block from raw or cooked tuna parts are fillets or fillet pieces.

3. Method according to claim 1 or 2, **characterized in that** the tuna parts are trimmed before or after being combined to form the combination of tuna parts forming the block in such a way that the block has a predetermined target weight.

4. Method according to one of the preceding claims, **characterized in that** the block is produced and/or formed by filling the unfrozen combination of tuna parts into an elastic wrapping, in particular into a pellet of natural or artificial intestine.

5. Method according to the preceding claim, **characterized in that** the wrapping with the not-yet-frozen combination of tuna parts is placed in a mold whose inner contour corresponds to the desired outer contour of the block, whereby the wrapping with the not-yet-frozen clusters of tuna parts is deep-frozen in the mold for the production of the molded block.

6. Method according to one of the preceding claims, **characterized in that** the block is formed and has such a diameter that the block corresponds to the diameter of an average head area of a premium quality tuna loin fillet or to the size of a tuna steak or a commercially available canned package, respectively.

7. Method according to the preceding claim, **characterized in that** the slices cut from the block are divided again, in particular cut into individual segments.

8. Method according to one of the preceding claims, **characterized in that** the tuna pieces produced according to one of the preceding claims, in particular in the form of tuna steaks, are automatically introduced into a packaging as output goods in the frozen state using a suitable method.

9. Method according to the preceding claim, **characterized in that** the packaging is a can.

## Revendications

1. Procédé de préparation de morceaux de thon, **caractérisé par** les étapes de procédé suivantes :
• Préparation d'au moins un bloc de morceaux de thon crus ou cuits par alignement et assemblage des morceaux de thon en tenant compte de la direction des fibres du thon pour former le bloc de morceaux de thon adjacents et/ou adhérents, de telle sorte que les morceaux de thon soient orientés lors de l'assemblage des blocs de telle sorte que le morceau de thon produit comprenne une surface de section transversale visible pour le consommateur final, qui présente l'aspect typique d'un morceau de filet découpé transversalement à la direction des fibres,
• Former ensuite le bloc ainsi obtenu, à l'état congelé ou non, en une forme finale adaptée à l'application,
• Congélation du bloc, s'il n'a pas été congelé avant le moulage, après le moulage,
• Découpe du bloc congelé et mis en forme dans la forme finale orientée vers l'application en morceaux le long de lignes de coupe qui sont orientées de manière à être transversales par rapport à la direction des fibres de la chair de thon,
la forme finale orientée vers l'application étant **caractérisée par le fait que** l'image de coupe est adaptée au souhait du consommateur de voir les fibres coupées du thon et que la mise en forme du bloc s'effectue par congélation de mise en forme dans un moule, par découpage et/ou par formage dans un dispositif de pressage dans lequel le bloc est amené sous pression dans la forme finale orientée vers l'application par un poinçon de pressage.

2. Procédé selon la revendication 1, **caractérisé en ce que** les parties de thon pour la préparation du bloc de parties de thon crues ou cuites sont des filets ou des morceaux de filets.

3. Procédé selon la revendication 1 ou 2, **caractérisé en ce que** les parties de thon sont coupées avant ou après le regroupement en la combinaison de parties de thon formant le bloc, de telle sorte que le bloc comprenne un poids cible prédéterminé.

4. Procédé selon l'une quelconque des revendications précédentes, **caractérisé en ce que** le bloc est préparé et/ou mis en forme par introduction de la combinaison non congelée de morceaux de thon dans une enveloppe élastique, en particulier une enveloppe en boyau naturel ou artificiel.

5. Procédé selon la revendication précédente, **caractérisé en ce que** l'enveloppe comprenant la combinaison non encore congelée de parties de thon est placée dans un moule dont le contour intérieur correspond au contour extérieur souhaité du bloc, l'enveloppe comprenant les clusters non encore congelés de parties de thon étant surgelée dans le moule pour la préparation du bloc formé.

6. Procédé selon l'une quelconque des revendications précédentes, **caractérisé en ce que** le bloc est formé et comprend un diamètre tel que le bloc correspond au diamètre d'une zone de tête moyenne d'un filet de dos de thon de qualité supérieure ou correspond à la taille d'un steak de thon ou d'un emballage de boîte de conserve du commerce compris entre 50 mm et 250 mm.

7. Procédé selon la revendication précédente, **caractérisé en ce que** les tranches découpées dans le bloc sont à nouveau découpées, notamment en segments individuels.

8. Procédé selon l'une quelconque des revendications précédentes, **caractérisé en ce que** les morceaux de thon fabriqués selon l'une quelconque des revendications précédentes, notamment sous forme de steaks de thon, sont introduits à l'état congelé dans un emballage de manière automatisée par un procédé approprié.

9. Procédé selon la revendication précédente, **caractérisé en ce que** l'emballage est une boîte.
